# EUROPÄISCHE PATENTSCHRIFT

(11) **EP 2 435 812 B1**
(45) Veröffentlichungstag und Bekanntmachung des Hinweises auf die Patenterteilung: **19.03.2014**
(21) Anmeldenummer: 10720127.9
(22) Anmeldetag: 06.05.2010
(51) Int. Cl.: G01M 15/02, G01M 13/02

(54) **PRÜFSTAND MIT TEMPERATURGESTEUERTEM KÜHLGEBLÄSE**
TEST BENCH HAVING TEMPERATURE-CONTROLLED COOLING BLOWER
BANC D'ESSAI PRÉSENTANT UN VENTILATEUR DE REFROIDISSEMENT À TEMPÉRATURE RÉGLABLE

(30) Priorität: 26.05.2009 DE 102009022675
(43) Veröffentlichungstag der Anmeldung: 04.04.2012
(73) Patentinhaber: HORIBA Europe GmbH, 64293 Darmstadt (DE)
(72) Erfinder: SENNHENN, Herbert, 64409 Messel (DE); HÜTTEL, Stefan, 63456 Hanau (DE)
(74) Vertreter: Müller - Hoffmann & Partner
(86) Internationale Anmeldenummer: PCT/EP2010/002794
(87) Internationale Veröffentlichungsnummer: WO 2010/142366

(56) Entgegenhaltungen:
- FR-A1- 2 894 091
- JP-A- 2003 322 182
- JP-A- 2005 245 085
- JP-A- 2007 116 792
- US-A- 4 914 329
- US-A1- 2004 066 099
- US-A1- 2008 150 376
- US-A1- 2008 215 207

## Beschreibung

Die Erfindung betrifft einen Prüfstand zum Prüfen eines Prüflings.

Derartige Prüfstände sind z.B. als Motoren- oder Getriebeprüfstände bekannt und unterstützen die Forschung und Entwicklung mit Hilfe von z.B. Funktionstests, Dauerlaufversuchen zur mechanischen Belastungsprüfung sowie Verbrauchs-, Abgas-, Geräusch- oder Klimauntersuchungen. Die Motorenprüfstände simulieren hierbei den Betrieb des Motors in einem kompletten Fahrzeug unter verschiedenen Umwelt- oder Anwendungsbedingungen. In dem Prüfstand kann der Prüfling mit einer Lastvorrichtung, z.B. einer Asynchronmaschine, einem Permanentmagnet-motor, einer hydraulischen Leistungsbremse oder einer Wirbelstrombremse gekoppelt werden. Die Lastvorrichtung simuliert die Last, gegen die der Motor im realen Betrieb arbeiten muss. Elektromotoren, die als Lastvorrichtung genutzt werden, werden häufig auch als Dynamometer bezeichnet.

Derartige Dynamometer benötigen im Betrieb eine leistungsfähige Kühlanlage, um eine Überhitzung zu vermeiden. Dabei ist zu beachten, dass die Dynamometer die vom Prüfling eingebrachte Leistung vollständig aufnehmen und abbauen müssen.

Es sind eine Reihe von Kühlverfahren bekannt, bei denen auf der Primärseite Fluidmedien wie Wasser oder Öl und auf der Sekundärseite Luft vorgesehen sind. Luftgekühlte Dynamometer haben den Vorteil, dass eine teure und komplexe Fluid-Zuführung und -Aufbereitung nicht erforderlich ist. Nachteilig hingegen ist bei der Luftkühlung der extrem hohe Geräuschpegel, der durch das Kühlgebläse verursacht wird.

Üblicherweise laufen derartige Kühlgebläse stets mit voller Leistung, um für jeden Betriebszustand und maximal spezifizierte Ansauglufttemperatur eine ausreichende Kühlung des Dynamometers sicherzustellen. Der dabei entstehende Geräuschpegel kann das Arbeiten in der Nähe des Prüfstands erschweren. Zudem wird Energie verschwendet, wenn das Kühlgebläse mit voller Leistung arbeitet, obwohl bei bestimmten Prüfzuständen auch eine geringere Kühlleistung ausreichen würde.

Aus der JP 2006-023244 ist ein Prüfstand bekannt, bei dem ein Dynamometer durch ein Kühlgebläse gekühlt wird, wobei die Drehzahl des Gebläsemotors in Abhängigkeit von dem Strom, der dem Dynamometer zugeführt wird, verändert wird. Da jedoch während eines Prüfzyklus die Drehzahl des Prüflings und damit auch die Drehzahl bzw. Belastung des Dynamometers häufig variiert, muss sich zwangsläufig der dem Dynamometer zugeführte Strom ebenso häufig ändern, was wiederum zu sich ändernden Gebläsedrehzahlen führt. Die sich daraus ergebenden Heulgeräusche des Gebläsemotors werden vom Prüfstandspersonal ebenfalls als unangenehm empfunden; zudem wird die Lebensdauer des Lüfters durch das ständige Beschleunigen reduziert.

Aus der FR 2 894 091 A1 ist eine Lastvorrichtung bekannt, die durch eine Gebläseeinrichtung kühlbar ist. Die Gebläseeinrichtung wird eingeschaltet, wenn ein Temperatursensor, der im Einlassbereich des Kühlmittels an der Lastvorrichtung angeordnet ist, ein Überschreiten einer Grenztemperatur detektiert. Der Erfindung liegt die Aufgabe zugrunde, einen Prüfstand anzugeben, bei dem die oben beschriebenen Nachteile des Standes der Technik vermeidbar sind.

Die Aufgabe wird erfindungsgemäß durch einen Prüfstand gemäß Anspruch 1 gelöst. Weiterhin wird ein Betriebsverfahren gemäß Anspruch 13 für einen derartigen Prüfstand angegeben. Ausgestaltungen der Erfindung sind den abhängigen Ansprüchen zu entnehmen.

Ein Prüfstand zum Prüfen eines Prüflings weist eine Lastvorrichtung auf, mit einer Lastwelle, die durch zwei voneinander beabstandete Lagereinrichtungen gelagert und mit dem Prüfling verbindbar ist, sowie mit einem Stator und einem auf der Lastwelle angeordneten und in dem Stator drehbaren Rotor. Weiterhin ist eine Gebläseeinrichtung zum Kühlen der Lastvorrichtung vorgesehen, mit einem Gebläsemotor und einer Drehzahlsteuereinrichtung zum Verändern der Drehzahl des Gebläsemotors, wobei die Gebläseeinrichtung eine Gebläsemotor-Steuereinrichtung aufweist und die Gebläsemotor-Steuereinrichtung einen ersten Temperatursensor aufweist, der in einer Statorwicklung des Stators angeordnet ist und zum Erzeugen eines Messsignals dient, das z.B. im Wesentlichen linear zu der gemessenen Temperatur ist. Die Gebläsemotor-Steuereinrichtung weist weiterhin eine Steuereinheit auf, zum Durchführen der folgenden Steuerungsmaßnahme: Kontinuierliches Ansteuern der Drehzahlsteuereinrichtung der Gebläseeinrichtung in Abhängigkeit von dem Messsignal des ersten Temperatursensors und unter Zugrundelegung einer Steuervorschrift in Form einer direkten Zuordnung der Drehzahl des Gebläsemotors und der von dem ersten Temperatursensor gemessenen Temperatur.

Somit ist in der Statorwicklung der erste Temperatursensor vorgesehen, der kontinuierlich die Temperatur in der Statorwicklung misst. Auf Basis des entsprechenden Messsignals wird die Drehzahl des Gebläsemotors eingestellt. Wenn somit die Lasteinrichtung in einem bestimmten Prüfvorgang viel Strom zieht und sich entsprechend erwärmt, wird diese Erwärmung unmittelbar in der Statorwicklung durch den ersten Temperatursensor detektiert. Dieser liefert das Mess-signal an die Steuereinheit, die daraufhin die Drehzahl des Gebläsemotors erhöht, um einen höheren Durchsatz an Kühlluft durch die Lastvorrichtung zu erreichen. Auf diese Weise wird einer unzulässigen Erwärmung der Lastvorrichtung entgegengewirkt.

Wenn daraufhin die Temperatur in der Statorwicklung wieder sinkt, wird auch dies durch den ersten Temperatursensor bemerkt, woraufhin die Steuereinheit die Drehzahl des Gebläsemotors wieder absenken kann.

Je nach Auslegung des Kühlgebläses können auch entsprechende Totzeitglieder oder Verzögerungsglieder vorgesehen werden, so dass nicht jede geringfügige Temperaturänderung in der Statorwicklung unmittelbar auch sofort eine Änderung der Gebläsedrehzahl nach sich zieht. Erst dann, wenn eine vorgegebene Zeit verstrichen ist, ohne dass die Belastung und damit die Temperatur sinkt, kann die Erhöhung der (oder entsprechend Verminderung) der Gebläsedrehzahl bewirkt werden.

Ebenso ist es auch möglich, z.B. mehrere gestaffelte Grenz- bzw. Schwellwerte vorzusehen, bei deren Über- oder Unterschreiten die Gebläsedrehzahl erhöht bzw. vermindert wird. In diesem Fall folgt die Gebläsedrehzahl der Temperatur nicht linear, sondern stufenweise. Dies kann unterstützt werden durch eine Hysterese, um zu verhindern, dass die Drehzahländerung nicht in zu kurzen Zeitabständen vorgenommen wird.

Anstelle eines linearen Zusammenhangs zwischen der Temperaturänderung und der Gebläsedrehzahl kann es auch sinnvoll sein, einen progressiven oder degressiven Zusammenhang zu wählen. Dies hängt auch von den jeweiligen Gegebenheiten im Prüfstand und den daraus resultierenden Kühlmöglichkeiten ab.

Die Gebläsemotor-Steuereinrichtung kann darüber hinaus einen zweiten und einen dritten Temperatursensor aufweisen, die jeweils in einer der Lagereinrichtungen für die Lagerung der Lastwelle angeordnet sind. Die Steuereinheit kann dementsprechend zum Durchführen der folgenden Steuerungsmaßnahmen ausgebildet sein:
+ Ansteuern der Drehzahlsteuereinrichtung der Gebläseeinrichtung zum Einstellen einer Maximaldrehzahl des Gebläsemotors, wenn der zweite und/oder der dritte Temperatursensor ein Überschreiten eines für die jeweilige Lagereinrichtung vorgegebenen Lager-Warngrenzwerts erkennt:
+ Abschalten der Lastvorrichtung, wenn der zweite und/oder der dritte Temperatursensor ein Überschreiten eines für die jeweilige Lagereinrichtung vorgegebenen Lager-Alarmgrenzwerts erkennt, wobei der Lager-Alarmgrenzwert größer als der Lager-Warngrenzwert ist.

Bei dieser Ausgestaltung sind demnach zwei weitere Temperatursensoren vorgesehen, die jeweils die Temperatur in oder an den Lagern der in der Lastvorrichtung vorgesehenen Lastwelle überwachen. Wenn einer der beiden Temperatursensoren ein Überschreiten eines ersten Grenzwerts (Lager-Warngrenzwert) feststellt, wird ein entsprechendes Signal von der Steuereinheit ausgewertet, die daraufhin ein Erhöhen der Drehzahl des Gebläsemotors auf einen vorgegebenen oder technisch bedingten Maximalwert bewirkt. Damit leistet das Kühlgebläse in diesem Betriebszustand eine maximale Kühlleistung, um die gesamte Lastvorrichtung und damit auch die Lagereinrichtungen zu kühlen.

Wenn jedoch die Temperatur in den Lagern weiter ansteigt, kann einer der beiden, d.h. der zweite oder der dritte Temperatursensor ein Überschreiten des vorgegebenen Lager-Alarmgrenzwerts erkennen. Daraufhin leitet die Steuereinheit entsprechende Maßnahmen ein, um die Lastvorrichtung abzuschalten und eine Schädigung der Lastvorrichtung oder des ganzen Prüfstands zu verhindern. Das Überschreiten des Lager-Alarmgrenzwerts ist ein Indiz für eine Fehlfunktion im Prüfstand.

Die Temperatursensoren sollten derart in oder an den beiden Lagereinrichtungen angeordnet sein, dass sie möglichst zuverlässig eine Temperaturänderung in den Lagern feststellen können.

Bei einer Variante weist die Gebläsemotor-Steuereinrichtung wenigstens einen vierten und einen fünften Temperatursensor auf, die in der Statorwicklung angeordnet sind und als Grenzwertsensoren dienen. Die Steuereinheit ist dann zum Durchführen der folgenden Steuerungsmaßnahmen ausgebildet:
+ Ansteuern der Drehzahlsteuereinrichtung der Gebläseeinrichtung zum Einstellen einer Maximaldrehzahl des Gebläsemotors, wenn der vierte Temperatursensor ein Überschreiten eines für die Temperatur der Statorwicklung vorgegebenen Stator-Warngrenzwerts erkennt;
+ Abschalten der Lastvorrichtung, wenn der fünfte Temperatursensor ein Überschreiten eines für die Temperatur der Statorwicklung vorgegebenen Stator-Alarmgrenzwerts erkennt, wobei der Stator-Alarmgrenzwert größer als der Stator-Warngrenzwert ist.

Demgemäß sind bei dieser Variante zusätzlich zu dem oben genannten ersten Temperatursensor in der Statorwicklung noch weitere Temperatursensoren, nämlich wenigstens der vierte und der fünfte Temperatursensor als Grenzwertsensoren vorgesehen. Einer der Temperatursensoren (der vierte) ist derart ausgelegt, dass er unmittelbar ein Überschreiten des Stator-Warngrenzwerts erkennt. Dieser Warngrenzwert ist derart ausgelegt, dass bei seinem Überschreiten die Lastvorrichtung mit maximaler Kühlleistung gekühlt werden muss. Dementsprechend wird die Drehzahl des Gebläsemotors auf den höchstmöglichen Wert eingestellt.

Der andere Temperatursensor (der fünfte) detektiert ein Überschreiten des Stator-Alarmgrenzwerts, was zu einem Abschalten der Lastvorrichtung führt, um Schäden an der Lastvorrichtung oder den Prüfstand zu verhindern.

Selbstverständlich sind die Bezeichnungen "vierter" und "fünfter" Temperatursensor willkürlich gewählt. Entscheidend ist es, dass einer dieser beiden Temperatursensoren im Hinblick auf das Überwachen des Stator-Warngrenzwerts ausgelegt ist, während der andere Temperatursensor ein Überschreiten des Stator-Alarmgrenzwerts überwachen soll.

Der vierte und der fünfte Temperatursensor können alternativ oder ergänzend zu den oben beschriebenen zweiten und dritten Temperatursensoren vorgesehen werden. Dementsprechend dient die Namensgebung "erster Temperatursensor". "zweiter Temperatursensor" etc. lediglich dazu, die Temperatursensoren jeweils mit einem eindeutigen Namen zu benennen. Eine Hierarchie soll dadurch jedoch nicht festgelegt werden. Ohne Weiteres kann der Prüfstand mit einem ersten, einem vierten und einem fünften Temperatursensor ausgestattet sein, während ein zweiter und ein dritter Temperatursensor nicht vorgesehen sind. Somit dienen diese Bezeichnungen auch nicht dem Durchzählen der Temperatursensoren.

Die Lastvorrichtung kann ein Dynamometer sein bzw. ein Dynamometer aufweisen, wie dies oben bereits anhand des Standes der Technik beschrieben wurde.

Der erste, der zweite und/oder der dritte Temperatursensor können jeweils einen Platin-Temperatursensor, insbesondere einen Pt100-Temperatursensor aufweisen. Pt100-Sensoren sind Temperaturfühler, die auf der Widerstandsänderung von Platin unter Temperatureinfluss basieren. Sie sind robust und zeichnen sich durch eine hohe Genauigkeit aus. Die Widerstandskennlinien derartiger Sensoren sind näherungsweise linear.

Der vierte und/oder der fünfte Temperatursensor können jeweils einen Kaltleiter-Temperatursensor mit nichtlinearem Widerstandsverlauf, insbesondere einen PTC-Tripel-Temperatursensor aufweisen. PTC-Tripel-Sensoren sind z.B. in der DIN 44082 genormt und dienen zum Schutz von elektrischen Maschinen gegen thermische Überlastung. PTC-Tripel-Sensoren erkennen insbesondere das Überschreiten eines voreingestellten Grenzwerts, bei dem sich der Widerstand im Messsensor stark ändert.

Zusätzlich zu dem vierten und dem fünften Temperatursensor kann wenigstens ein weiterer Temperatursensor in der Statorwicklung vorgesehen sein. Das bedeutet, dass in der Statorwicklung über den vierten und den fünften Temperatursensor hinaus auch noch weitere Temperatursensoren angeordnet werden können, wenn dies sinnvoll erscheint.

Wie der vierte und der fünfte Temperatursensor kann auch der weitere Temperatursensor einen Kaltleiter-Temperatursensor mit nichtlinearem Widerstandsverlauf, insbesondere einen PTC-Tripel-Temperatursensor aufweisen.

Die Steuervorschrift zum Ansteuern der Drehzahlsteuereinrichtung des Gebläses kann einen Bereich mit einem linearen Zusammenhang zwischen der Drehzahl des Gebläsemotors und der durch den ersten Temperatursensor gemessenen Temperatur vorsehen. In diesem Fall besteht eine direkte Zuordnung der Drehzahl des Gebläsemotors und der von dem ersten Temperatursensor gemessenen Temperatur.

Insbesondere kann der lineare Zusammenhang zwischen einer vordefinierten Temperatur-Untergrenze und einer vordefinierten Temperatur-Obergrenze vorgegeben sein. Solange die Dynamometer-Temperatur niedriger als die Temperatur-Untergrenze ist, dreht sich der Gebläsemotor mit einer voreingestellten Minimalgeschwindigkeit. Wenn sich die Temperatur des Dynamometers in dem Bereich zwischen der Temperatur-Untergrenze und der Temperatur-Obergrenze bewegt, wird die Gebläsegeschwindigkeit entsprechend linear angepasst. Oberhalb der Temperatur-Obergrenze wird die Gebläsegeschwindigkeit auf Maximalgeschwindigkeit eingestellt.

Die Kaltleiter-Temperatursensoren, insbesondere die PTC-Sensoren können gleichförmig am Umfang der Statorwicklung verteilt angeordnet sein. Auf diese Weise lässt sich die Temperatur in der gesamten Statorwicklung zuverlässig überwachen.

Die Drehzahl-Steuereinrichtung kann einen Frequenzumformer zum Einstellen bzw. Bereitstellen eines Versorgungsstroms für den Gebläsemotor aufweisen. Der Versorgungsstrom wird insbesondere als Dreiphasenstrom bereitgestellt.

Ein Verfahren zum Steuern der Drehzahl des Gebläsemotors ermöglicht den oben angegebenen Betrieb des Prüfstands.

Diese und weitere Vorteile und Merkmale der Erfindung werden nachfolgend anhand von Beispielen unter Zuhilfenahme der begleitenden Figuren näher erläutert. Es zeigen:
- **Fig. 1**: den prinzipiellen Aufbau eines erfindungsgemäßen Prüfstands;
- **Fig. 2**: den Aufbau einer Temperaturüberwachung für ein Dynamometer;
- **Fig. 3**: den prinzipiellen Aufbau einer Gebläsesteuerung; und
- **Fig. 4**: eine Kennlinie zum Steuern der Gebläsedrehzahl.

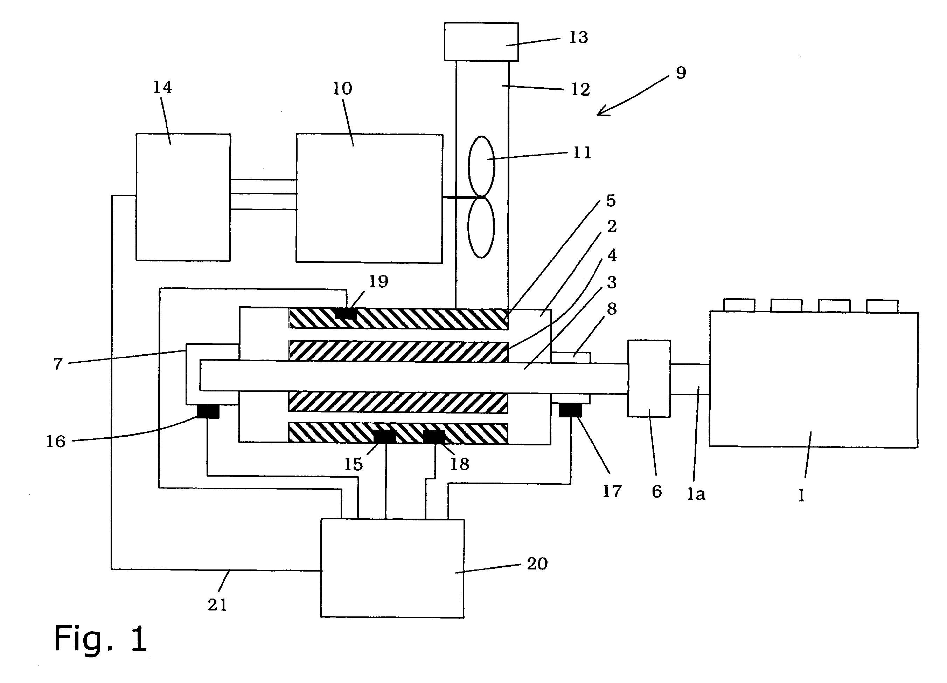

Fig. 1 zeigt schematisch den Aufbau eines Prüfstands, sofern er für die vorliegende Erfindung relevant ist.

Der Prüfstand dient zum Prüfen eines Prüflings 1, der im gezeigten Beispiel durch einen Verbrennungsmotor gebildet wird. Der Prüfling 1 selbst ist nicht Bestandteil des Prüfstands. Vielmehr ist lediglich eine Prüflingsaufnahme als Teil des Prüfstands anzusehen, die jedoch in der Fig. 1 nicht näher dargestellt ist.

Koaxial zum Prüfling 1 ist ein als Lastvorrichtung dienendes Dynamometer 2 vorgesehen. Der Prüfling 1 und das Dynamometer 2 werden auf einer nicht dargestellten Basis (Fundament, Grundplatte etc.) gelagert.

Das Dynamometer 2 entspricht im Prinzip einem Elektromotor, z.B. einer Asynchronmaschine oder einem Permanentmagnet-Motor und ist an sich bekannt. Es weist eine Lastwelle 3 auf, auf der ein Rotor 4 vorgesehen ist, der in einem im Inneren des Dynamometers 2 vorgesehen Stator 5 drehbar angeordnet ist. Der Stator 5 wird unter anderem durch eine an sich bekannte Statorwicklung gebildet. Die Lastwelle 3 ist koaxial zu einer Motorwelle 1a angeordnet und mit dieser über eine Ausgleichskupplung 6 in bekannter Weise gekoppelt.

Die Lastwelle 3 ist in zwei Lagern 7, 8 gelagert. Die Lager können sich an einem Gehäuse des Dynamometers 2 abstützen, so dass die Lagerkräfte über das Gehäuse nach unten zum Fundament abgeleitet werden können.

Oberhalb von dem Dynamometer 2 ist eine Gebläseeinrichtung 9 angeordnet. Die Gebläseeinrichtung 9 dient zum Kühlen des Dynamometers 2. Zu diesem Zweck weist die Gebläseeinrichtung 9 einen Gebläsemotor 10 auf, der einen Ventilator 11 antreibt. Der Ventilator 11 ist in einem Luftkanal 12 angeordnet. Am Lufteinlass des Luftkanals 12 kann ein Luftfilter 13 vorgesehen sein.

Im Betrieb saugt der Ventilator 11, angetrieben durch den Gebläsemotor 10, Luft über den Luftfilter 13 an und fördert diese durch das Dynamometer 2. Die Luft wird dann in geeigneter Weise, z.B. auf der gegenüberliegenden Seite des Dynamometers 2 über im Gehäuse vorgesehene Kühlschlitze oder über einen weiteren Luftkanal wieder abgeführt.

Die bisher beschriebenen Komponenten sind im Wesentlichen bekannt und bei vielen Prüfständen zu finden. Darüber hinaus sind weitere Einrichtungen vorhanden, z.B. Kalibriervorrichtungen zum Kalibrieren des Prüfstands, Messeinrichtungen. Abgasabführungen, Medienzu- und -abführungen, Klimaeinrichtungen etc. Diese Einrichtungen spielen jedoch für die vorliegende Erfindung keine Rolle und sind daher nicht näher dargestellt.

Die Gebläseeinrichtung 9 weist außerdem einen Frequenzumformer 14 auf, zum Versorgen des Gebläsemotors 10 mit Strom und zum Einstellen der Drehzahl des Gebläsemotors 10. Der Frequenzumformer 14 dient somit als Drehzahlsteuereinrichtung und stellt einen Dreiphasenwechselstrom bereit. Je nach Ansteuerung des Frequenzumformers 14 kann die Drehzahl des Gebläsemotors 10 verändert werden.

Weiterhin weist die Gebläseeinrichtung eine Gebläsemotor-Steuereinrichtung auf, die durch mehrere Komponenten gebildet wird.

So ist in der Statorwicklung ein erster Temperatursensor 15 angeordnet, der als Pt100-Sensor ausgebildet ist.

An den beiden Lagern 7, 8 ist ein zweiter Temperatursensor 16 und ein dritter Temperatursensor 17 angeordnet, die ebenfalls als Pt100-Sensoren ausgebildet sind und die Temperatur in den Lagern überwachen.

Schließlich sind in der Wicklung des Stators 5 noch ein vierter Temperatursensor 18 und ein fünfter Temperatursensor 19 vorgesehen, die als PTC-Tripel-Sensoren ausgebildet sind.

Die Messsignale der Temperatursensoren werden einer gemeinsamen Steuereinheit 20 zugeführt, wie in Fig. 1 durch Leitungen dargestellt. Die Steuereinheit 20 wertet die Signale der Temperatursensoren aus und gibt entsprechende Steuersignale über eine Steuerleitung 21 an den Frequenzumformer 14, um die Drehzahl des Gebläsemotors 10 in der gewünschten Weise einzustellen.

Der erste Temperatursensor 15 erfasst die Temperatur an einer bestimmten Stelle im Stator 5 und liefert kontinuierlich oder taktweise ein entsprechendes Messsignal über die tatsächliche Temperatur im Dynamometer 2. Anhand des Messsignals wird durch die Steuereinheit 20 ein entsprechender Steuerwert für den Frequenzumformer 14 berechnet, so dass dieser die gewünschte Drehzahl des Gebläsemotors 10 einstellt.

Der zweite Temperatursensor 16 und der dritte Temperatursensor 17 überwachen die Temperaturen in den Lagern 7, 8. Wenn in einem der Lager 7, 8ein erster Grenzwert (Lager-Warngrenzwert) überschritten wird, wird dies durch den zweiten oder den dritten Temperatursensor 16, 17 bzw. die die Messsignale auswertende Steuereinheit 20 festgestellt, worauf hin die Steuereinheit 20 den Frequenzumformer 14 derart ansteuert, dass der Gebläsemotor 10 mit der maximal möglichen Drehzahl arbeitet, um die höchstmögliche Kühlleistung zu erzielen.

Wird jedoch durch den zweiten oder den dritten Temperatursensor 16, 17 das Überschreiten eines weiteren, höheren Grenzwerts (Lager-Alarmgrenzwert) erkannt, so schaltet die Steuereinheit 20 das Dynamometer 2 oder gar den ganzen Prüfstand ab.

Der zweite und der dritte Temperatursensor 16, 17 sind somit in der Lage, jeweils zumindest das Überschreiten von zwei Grenzwerten zu erkennen.

Im Gegensatz dazu erkennen der vierte und der fünfte Temperatursensor 18, 19 lediglich das Überschreiten jeweils eines einzigen Grenzwerts. Dabei ist einer der Temperatursensoren 18, 19, z.B. der vierte Temperatursensor 18 derart ausgelegt, dass er das Überschreiten eines Stator-Warngrenzwerts erkennt, worauf hin die Steuereinheit ein Steuersignal gibt, um das Gebläse mit maximaler Leistung zu betreiben.

Der andere Temperatursensor, z.B. der fünfte Temperatursensor 19, erkennt das Überschreiten eines höheren Grenzwerts, des sogenannten Stator-Alarmgrenzwerts, oberhalb von dem eine Schädigung der Anlage eintreten könnte. Dementsprechend schaltet die Steuereinheit 20 bei Vorliegen oder Überschreiten des Stator-Alarmgrenzwerts die Anlage oder zumindest das Dynamometer 2 ab.

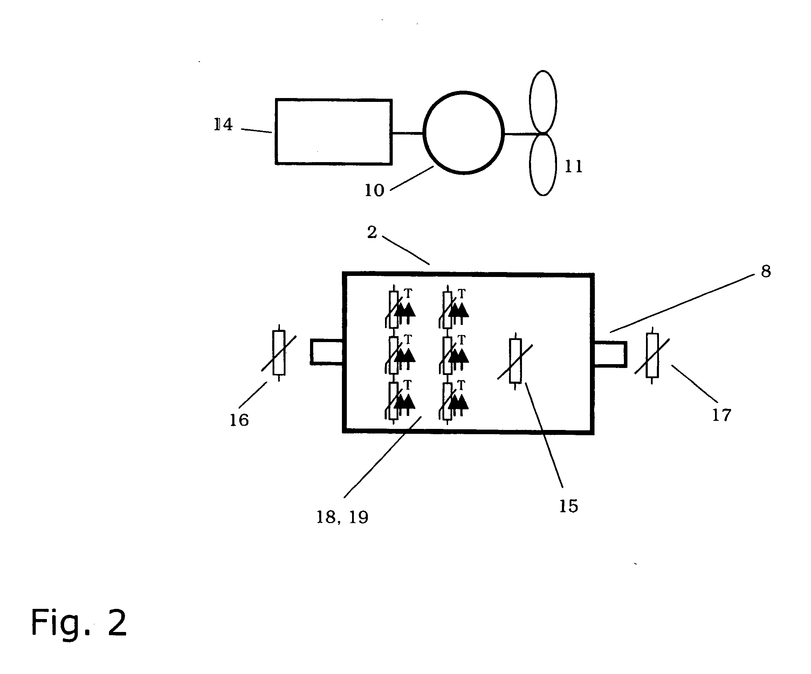

Fig. 2 zeigt den prinzipiellen Aufbau der Gebläsesteuerung und insbesondere die Anordnung der Temperatursensoren nochmals auf andere Weise.

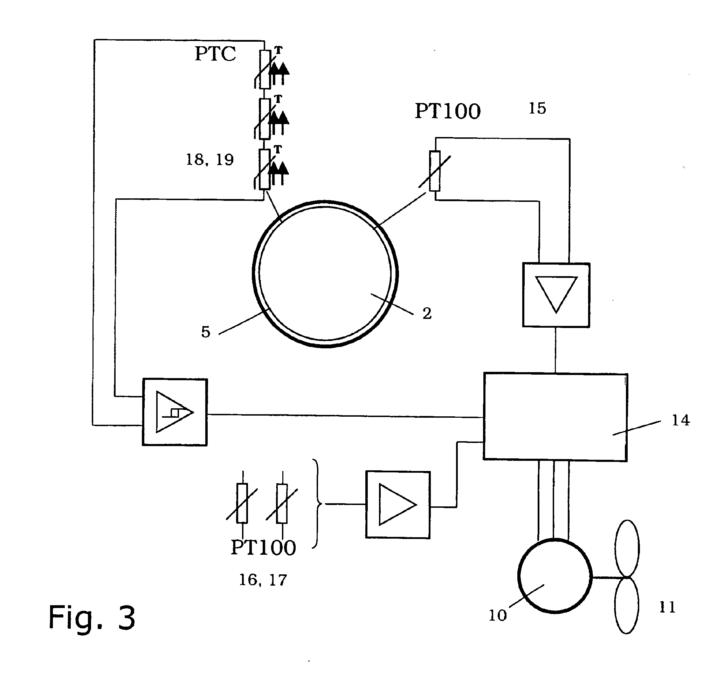

In Fig. 3 wird das Schaltprinzip der oben beschriebenen Gebläsesteuerung verdeutlicht.

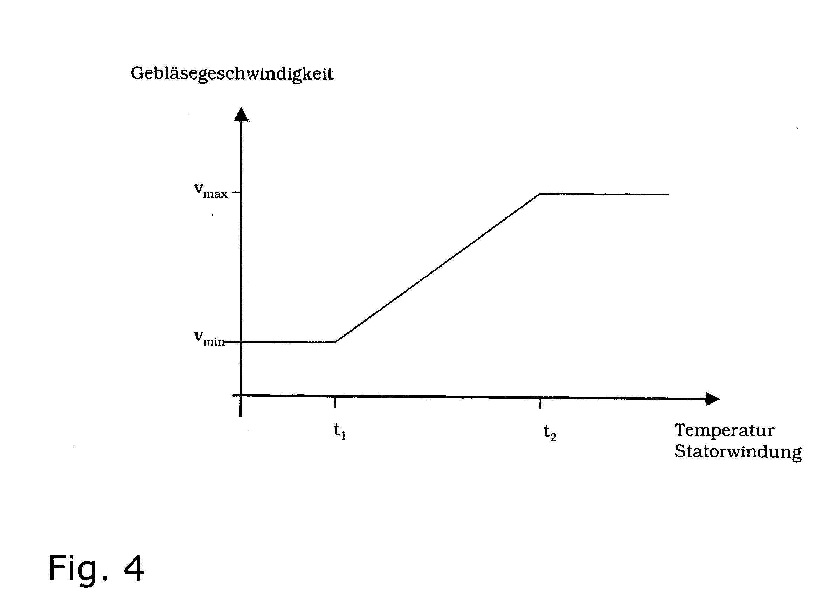

In Fig. 4 wird eine Kennlinie für die Steuerung der Gebläsedrehzahl aufgrund des Messsignals von dem ersten Temperatursensor 15 dargestellt.

Demgemäß weist die Kennlinie einen Bereich unterhalb einer Temperatur t, auf, bei dem die Gebläsegeschwindigkeit konstant auf minimalem Niveau vₘᵢₙ gehalten wird.

In einem Temperaturbereich zwischen t, und t₂ steigt die Gebläsegeschwindigkeit kontinuierlich linear an, bis bei der Temperatur t₂ die Maximalgeschwindigkeit vₘₐₓ erreicht wird.

Oberhalb von der Temperatur t₂ wird die Maximalgeschwindigkeit vₘₐₓ beibehalten.

Anstelle des in Fig. 4 gezeigten linearen Zusammenhangs zwischen den Temperaturen t₁ und t₂ kann auch ein anderer Kennlinienverlauf gewählt werden, z.B. ein progressiver, ein degressiver oder ein gestufter.

Der vierte und der fünfte Temperatursensor 18, 19 weisen als PTC-Tripelsensoren eine nichtlineare Sprungcharakteristik auf, die dafür vorgesehen ist, dass Überschreiten eines Temperaturgrenzwerts festzustellen. So kann wenigstens einer dieser Temperatursensoren mit dem Eingang eines Messverstärkers mit einem Schwellwertdetektor verbunden sein. Der Schwellwert bzw. Grenzwert wird auf einen vorgegebenen Temperaturwert eingestellt, z.B. auf den Stator-Warngrenzwert, der für die Anlage geeignet ist. Der Ausgang des Schwellwertdetektors triggert einen digitalen Eingang bei dem Frequenzumformer 14. Dieser Eingang veranlasst den Frequenzumformer 14 dazu, den Gebläsemotor mit maximaler Drehzahl zu betreiben. Der Messwertverstärker und der Schwellwertdetektor können in der Steuereinheit 20 angeordnet sein.

Wenn bei Überschreiten des Lagers-Alarmgrenzwerts oder des Stator-Alarmgrenzwerts ein Abschalten des Dynamometers 2 bewirkt werden soll, kann die Steuereinheit 20 dies über eine nicht dargestellte Schalteinheit bewirken.

Der vierte und der fünfte Temperatursensor 18, 19 können am Umfang des Stators 5 beliebig, z.B. mit gleichem Abstand zueinander angeordnet sein. Die Verwendung von mehr als einem PTC-Sensor beruht auf Sicherheitsgründen und dient dazu, einen Überblick über die Temperaturverteilung in der Statorwicklung zu erhalten.

Es ist ohne Weiteres möglich, auch mehr als zwei PTC-Sensoren (vierter und fünfter Temperatursensor 18, 19) in der Wicklung des Stators 5 anzuordnen, um die Temperaturüberwachung zu verfeinern. Wenn nur einer dieser PTC-Sensoren ein Überschreiten des jeweiligen Grenzwerts anzeigt, ergreift die Steuereinheit 20 die vorgesehenen Maßnahmen und erhöht insbesondere die Gebläsedrehzahl auf den maximalen Wert.

## Patentansprüche

1. Prüfstand zum Prüfen eines Prüflings (1), mit
- einer Lastvorrichtung (2), mit einer Lastwelle (3), die durch zwei voneinander beabstandete Lagereinrichtungen (7, 8) gelagert und mit dem Prüfling (1) verbindbar ist, sowie mit einem Stator (5) und einem auf der Lastwelle (3) angeordneten und in dem Stator (5) drehbaren Rotor (4); und mit
- einer Gebläseeinrichtung (9) zum Kühlen der Lastvorrichtung (2), mit einem Gebläsemotor (10) und einer Drehzahlsteuereinrichtung (14) zum Verändern der Drehzahl des Gebläsemotors (10); wobei
- die Gebläseeinrichtung eine Gebläsemotor-Steuereinrichtung aufweist;
- die Gebläsemotor-Steuereinrichtung einen ersten Temperatursensor (15) aufweist, der in einer Statorwicklung des Stators (5) angeordnet ist und zum Erzeugen eines Messsignals dient:
- die Gebläsemotor-Steuereinrichtung weiterhin eine Steuereinheit (20) aufweist, wobei die Steuereinheit zum Durchführen der folgenden Steuerungsmaßnahme ausgebildet ist
+ Ansteuern der Drehzahlsteuereinrichtung (14) der Gebläseeinrichtung (9) in Abhängigkeit von dem Messsignal des ersten Temperatursensors (15) und unter Zugrundelegung einer Steuervorschrift in Form einer Zuordnung der Drehzahl des Gebläsemotors (10) und der von dem ersten Temperatursensor (15) gemessenen Temperatur.

2. Prüfstand nach Anspruch 1, **dadurch gekennzeichnet, dass**
- die Gebläsemotor-Steuereinrichtung einen zweiten und einen dritten Temperatursensor (16, 17) aufweist, die jeweils in einer der Lagereinrichtungen (7, 8) angeordnet sind; und dass
- die Steuereinheit (20) ausgebildet ist zum Durchführen der folgenden Steuerungsmaßnahmen
+ Ansteuern der Drehzahlsteuereinrichtung (14) der Gebläseeinrichtung (9) zum Einstellen einer Maximaldrehzahl des Gebläsemotors (10), wenn der zweite (16) und/oder der dritte Temperatursensor (17) ein Überschreiten eines für die jeweilige Lagereinrichtung (7, 8) vorgegebenen Lager-Warngrenzwerts erkennt,
+ Abschalten der Lastvorrichtung (2), wenn der zweite (16) und/oder der dritte Temperatursensor (17) ein Überschreiten eines für die jeweilige Lagereinrichtung (7, 8) vorgegebenen Lager-Alarmgrenzwerts erkennt, wobei der Lager-Alarmgrenzwert größer als der Lager-Warngrenzwert ist.

3. Prüfstand nach Anspruch 1 oder 2, **dadurch gekennzeichnet, dass**
- die Gebläsemotor-Steuereinrichtung wenigstens einen vierten und einen fünften Temperatursensor (18, 19) aufweist, die in der Statorwicklung angeordnet sind und als Grenzwertsensoren dienen;
- die Steuereinheit (20) ausgebildet ist zum Durchführen der folgenden Steuerungsmaßnahmen
+ Ansteuern der Drehzahlsteuereinrichtung (14) der Gebläseeinrichtung (9) zum Einstellen einer Maximaldrehzahl des Gebläsemotors (10), wenn der vierte Temperatursensor (18) ein Überschreiten eines für die Temperatur der Statorwicklung vorgegebenen Stator-Warngrenzwerts erkennt,
+ Abschalten der Lastvorrichtung (2), wenn der fünfte Temperatursensor (19) ein Überschreiten eines für die Temperatur der Statorwicklung vorgegebenen Stator-Alarmgrenzwerts erkennt, wobei der Stator-Alarmgrenzwert größer als der Stator-Warngrenzwert ist.

4. Prüfstand nach einem der Ansprüche 1 bis 3, **dadurch gekennzeichnet, dass** die Lastvorrichtung (2) ein Dynamometer ist.

5. Prüfstand nach Anspruch 2 oder nach Anspruch 2 und einem der Ansprüche 3 oder 4, **dadurch gekennzeichnet, dass** der erste (15), der zweite (16) und/oder der dritte Temperatursensor (17) jeweils einen Platin-Temperatursensor. Insbesondere einen Pt100-Temperatursensor aufweisen.

6. Prüfstand nach Anspruch 3 oder nach Anspruch 3 und einem der Ansprüche 4 oder 5, **dadurch gekennzeichnet, dass** der vierte (18) und/oder der fünfte Temperatursensor (19) jeweils einen Kaltleiter-Temperatursensor mit nichtlinearem Widerstandsverlauf, insbesondere einen PTC-Tripel-Temperatursensor aufweisen.

7. Prüfstand nach Anspruch 3 oder nach Anspruch 3 und einem der Ansprüche 4 bis 6, **dadurch gekennzeichnet, dass** zusätzlich zu dem vierten (18) und dem fünften Temperatursensor (19) wenigstens ein weiterer Temperatursensor in der Statorwicklung vorgesehen ist.

8. Prüfstand nach Anspruch 7, **dadurch gekennzeichnet, dass** der weitere Temperatursensor einen Kaltleiter-Temperatursensor mit nichtlinearem Widerstandsverlauf, insbesondere einen PTC-Tripel-Temperatursensor aufweist.

9. Prüfstand nach einem der Ansprüche 1 bis 8, **dadurch gekennzeichnet, dass** die Steuervorschrift zum Ansteuern der Drehzahlsteuereinrichtung (14) des Gebläsemotors (10) einen Bereich mit einem linearen Zusammenhang zwischen der Drehzahl des Gebläsemotors (10) und der durch den ersten Temperatursensor (15) gemessenen Temperatur vorsieht.

10. Prüfstand nach Anspruch 9, **dadurch gekennzeichnet, dass** der lineare Zusammenhang zwischen einer vordefinierten Temperatur-Untergrenze (t₁) und einer vordefinierten Temperatur-Obergrenze (t₂) vorgegeben ist.

11. Prüfstand nach Anspruch 6 oder 8, **dadurch gekennzeichnet, dass** die Kaltleiter-Temperatursensoren, insbesondere die PTC-Sensoren gleichförmig am Umfang der Statorwicklung verteilt angeordnet sind.

12. Prüfstand nach einem der Ansprüche 1 bis 11, **dadurch gekennzeichnet, dass** die Drehzahlsteuereinrichtung (14) einen Frequenzumformer zum Einstellen eines Versorgungsstroms für den Gebläsemotor (10) aufweist.

13. Verfahren zum Steuern der Drehzahl eines Gebläsemotors (10) in einer Gebläseeinrichtung (9) zum Kühlen einer Lastvorrichtung (2) eines Prüfstands nach einem der vorstehenden Ansprüche, wobei die Steuereinheit (20) der Gebläsemotor-Steuereinrichtung die folgende Steuerungsmaßnahme durchführt:
+ Kontinuierliches Ansteuern der Drehzahlsteuereinrichtung (14) der Gebläseeinrichtung (9) in Abhängigkeit von einem Messsignal des ersten Temperatursensors (15) und unter Zugrundelegung einer Steuervorschrift in Form einer Zuordnung der Drehzahl des Gebläsemotors (10) und der von dem ersten Temperatursensor (15) gemessenen Temperatur.

14. Verfahren nach Anspruch 13, wobei die Steuereinheit die folgenden Steuerungsmaßnahmen durchführt:
+ Ansteuern der Drehzahlsteuereinrichtung (14) der Gebläseeinrichtung (9) zum Einstellen einer Maximaldrehzahl des Gebläsemotors (10), wenn der zweite (16) und/oder der dritte Temperatursensor (17) ein Überschreiten eines für die jeweilige Lagereinrichtung (7. 8) vorgegebenen Lager-Warngrenzwerts erkennt.
+ Abschalten der Lastvorrichtung (2), wenn der zweite (16) und/oder der dritte Temperatursensor (17) ein Überschreiten eines für die jeweilige Lagereinrichtung (7, 8) vorgegebenen Lager-Alarmgrenzwerts erkennt, wobei der Lager-Alarmgrenzwert größer als der Lager-Warngrenzwert ist.

15. Verfahren nach Anspruch 13 oder 14, wobei die Steuereinheit die folgenden Steuerungsmaßnahmen durchführt:
+ Ansteuern der Drehzahlsteuereinrichtung (14) der Gebläseeinrichtung (9) zum Einstellen einer Maximaldrehzahl des Gebläsemotors (10), wenn der vierte Temperatursensor (18) ein Überschreiten eines für die Temperatur der Statorwicklung vorgegebenen Stator-Warngrenzwerts erkennt,
+ Abschalten der Lastvorrichtung (2), wenn der fünfte Temperatursensor (19) ein Überschreiten eines für die Temperatur der Statorwicklung vorgegebenen Stator-Alarmgrenzwerts erkennt, wobei der Stator-Alarmgrenzwert größer als der Stator-Warngrenzwert ist.

## Claims

1. A test bench for testing a test specimen (1) comprising
- a load device (2) comprising a load shaft (3), which is supported by means of two support devices (7, 8), which are spaced apart from one another, and which can be connected to the test specimen (1), as well as comprising a stator (5) and a rotor (4), which is arranged on the load shaft (3) and which can be rotated in the stator (5); and comprising
- a blower device (9) for cooling the load device (2), comprising a blower motor (10) and a speed control device (14) for changing the speed of the blower motor (10); wherein
- the blower device encompasses a blower motor control device;
- the blower motor control device encompasses a first temperature sensor (15), which is arranged in a stator winding of the stator (5) and which serves to generate a measuring signal;
- the blower motor control device furthermore encompasses a control unit (20), wherein the control unit is designed to carry out the following control measure
+ actuating the speed control device (14) of the blower device (19) as a function of the measuring signal of the first temperature sensor (15) and on the basis of a control provision in the form of an allocation of the speed of the blower motor (10) and of the temperature measured by the first temperature sensor (15).

2. The test bench according to claim 1, **characterized in that**
- the blower motor control device encompasses a second and a third temperature sensor (16, 17), which are in each case arranged in one of the support devices (7, 8); and **in that**
- the control unit (20) is designed to carry out the following control measures
+ actuating the speed control device (14) of the blower device (9) for adjusting a maximum speed of the blower motor (10) when the second (16) and/or the third temperature sensor (17) identifies an exceeding of a support warning limit value, which is provided for the respective support device (7, 8),
+ turning off the load device (2) when the second (16) and/or the third temperature sensor (17) identifies an exceeding of a support alarm limit value, which is provided for the respective support device (7, 8), wherein the support alarm limit value is greater than the support warning limit value.

3. The test bench according to claim 1 or 2, **characterized in that**
- the blower motor control device encompasses at least a fourth and a fifth temperature sensor (18, 19), which are arranged in the stator winding and which serve as limit value sensors;
- the control unit (20) is designed for carrying out the following control measures
+ actuating the speed control device (14) of the blower device (9) for adjusting a maximum speed of the blower motor (10) when the fourth temperature sensor (18) identifies an exceeding of a stator warning limit value, which is provided for the temperature of the stator winding,
+ turning off the load device (2) when the fifth temperature sensor (19) identifies an exceeding of a stator alarm limit value, which is provided for the temperature of the stator winding, wherein the stator alarm limit value is greater than the stator warning limit value.

4. The test bench according to any one of claims 1 to 3, **characterized in that** the load device (2) is a dynamometer.

5. The test bench according to claim 2 or according to claim 2and any one of claims 3 or 4, **characterized in that** the first (15), the second (16) and/or the third temperature sensor (17) in each case encompass a platinum temperature sensor, in particular a Pt100 temperature sensor.

6. The test bench according to claim 3 or according to claim 3 and any one of claims 4 or 5, **characterized in that** the fourth (18) and/or the fifth temperature sensor (19) in each case encompass a PTC temperature sensor comprising a non-linear resistance curve, in particular a PTC triple temperature sensor.

7. The test bench according to claim 3 or according to claim 3 and any one of claims 4 or 6, **characterized in that**, in addition to the fourth (18) and the fifth temperature sensor (19), provision is made in the stator winding for at least one further temperature sensor.

8. The test bench according to claim 7, **characterized in that** the further temperature sensor encompasses a PTC temperature sensor comprising a non-linear resistance curve, in particular a PTC triple temperature sensor.

9. The test bench according to any one of claims 1 to 8, **characterized in that** the control provision for actuating the speed control device (14) of the blower motor (10) provides for a range comprising a linear context between the speed of the blower motor (10) and the temperature, which is measured by means of the first temperature sensor (15).

10. The test bench according to claim 9, **characterized in that** the linear context between a predefined lower temperature limit (t₁) and a predefined upper temperature limit (t₂) is provided.

11. The test bench according to claim 6 or 8, **characterized in that** the PTC temperature sensors, in particular the PTC sensors, are arranged so as to be evenly distributed on the periphery of the stator winding.

12. The test bench according to any one of claims 1 to 11, **characterized in that** the speed control device (14) encompasses a frequency converter for adjusting a supply current for the blower motor (10).

13. A method for controlling the speed of a blower motor (10) in a blower device (9) for cooling a load device (2) of a test bench according to any one of the preceding claims, wherein the control unit (20) of the blower motor control device carries out the following control measures:
+ continuous actuation of the speed control device (14) of the blower device (9) as a function of the measuring signal of the first temperature sensor (15) and based on a control provision in the form of an allocation of the speed of the blower motor (10) and of the temperature measured by the first temperature sensor (15).

14. The method according to claim 13, wherein the control unit carries out the following control measures:
+ actuating the speed control device (14) of the blower device (9) for adjusting a maximum speed of the blower motor (10) when the second (16) and/or the third temperature sensor (17) identifies an exceeding of a support warning limit value, which is provided for the respective support device (7, 8),
+ turning off the load device (2) when the second (16) and/or the third temperature sensor (17) identifies an exceeding of a support alarm limit value, which is provided for the respective support device (7, 8), wherein the support alarm limit value is greater than the support warning limit value.

15. The method according to claim 13 or 14, wherein the control unit carries out the following control measures:
+ actuating the speed control device (14) of the blower device (9) for adjusting a maximum speed of the blower motor (10) when the fourth temperature sensor (18) identifies an exceeding of a stator warning limit value, which is provided for the temperature of the stator winding,
+ turning off the load device (2) when the fifth temperature sensor (19) identifies an exceeding of a stator alarm limit value, which is provided for the temperature of the stator winding, wherein the stator alarm limit value is greater than the stator warning limit value.

## Revendications

1. Banc d'essai pour tester un échantillon (1), avec
- un dispositif de contrainte (2) avec un arbre de contrainte (3) qui est monté grâce à deux dispositifs de montage (7, 8) espacés l'un de l'autre et qui est apte à être relié à l'échantillon (1), et avec un stator (5) et un rotor (4) disposé sur l'arbre de contrainte (3) et apte à tourner dans le stator (5) ; et avec
- un dispositif à ventilateur (9) pour refroidir le dispositif de contrainte (2), avec un moteur de ventilateur (10) et un dispositif de commande de vitesse de rotation (14) pour modifier la vitesse de rotation du moteur de ventilateur (10) ; étant précisé que
- le dispositif à ventilateur comporte un dispositif de commande de moteur de ventilateur ;
- le dispositif de commande de moteur de ventilateur comporte un premier capteur de température (15) qui est disposé dans un enroulement de stator du stator (5) et qui sert à produire un signal de mesure ;
- le dispositif de commande de moteur de ventilateur comporte également une unité de commande (20), étant précisé que l'unité de commande est conçue pour prendre les dispositions de commande suivantes :
+ déclencher le dispositif de commande de vitesse de rotation (14) du dispositif à ventilateur (9) en fonction du signal de mesure du premier capteur de température (15) et sur la base d'une prescription de commande sous la forme d'une affectation de la vitesse de rotation du moteur de ventilateur (10) et de la température mesurée par le premier capteur de température (15).

2. Banc d'essai selon la revendication 1, **caractérisé en ce que**
- le dispositif de commande de moteur de ventilateur comporte des deuxième et troisième capteurs de température (16, 17) qui sont disposés respectivement dans l'un des dispositifs de montage (7, 8) ; et **en ce que**
- l'unité de commande (20) est conçue pour prendre les dispositions de commande suivantes :
+ déclenchement du dispositif de commande de vitesse de rotation (14) du dispositif à ventilateur (9) pour régler une vitesse de rotation maximale du moteur de ventilateur (10) si les deuxième (16) et/ou troisième (17) capteurs de température détectent un dépassement d'une valeur limite d'avertissement de support qui est prédéterminée pour le dispositif de support (7, 8) respectif,
+ arrêt du dispositif de contrainte (2) si les deuxième (16) et/ou troisième (17) capteurs de température détectent un dépassement d'une valeur limite d'alarme de support qui est prédéterminée pour le dispositif de support (7, 8) respectif, étant précisé que la valeur limite d'alarme de support est supérieure à la valeur limite d'avertissement de support.

3. Banc d'essai selon la revendication 1 ou 2, **caractérisé en ce que**
- le dispositif de commande de moteur de ventilateur comporte au moins des quatrième et cinquième capteurs de température (18, 19), qui sont disposés dans l'enroulement de stator et qui servent de capteurs de valeur limite ;
- l'unité de commande (20) est conçue pour prendre les dispositions de commande suivantes
+ déclenchement du dispositif de commande de vitesse de rotation (14) du dispositif à ventilateur (9) pour régler une vitesse de rotation maximale du moteur de ventilateur (10) si le quatrième capteur de température (18) détecte un dépassement d'une valeur limite d'avertissement de stator qui est prédéterminée pour la température de l'enroulement de stator,
+ arrêt du dispositif de contrainte (2) si le cinquième capteur de température (19) détecte un dépassement d'une valeur limite d'alarme de stator qui est prédéterminée pour la température de l'enroulement de stator, étant précisé que la valeur limite d'alarme de stator est supérieure à la valeur limite d'avertissement de stator.

4. Banc d'essai selon l'une des revendications 1 à 3, **caractérisé en ce que** le dispositif de contrainte (2) est un dynamomètre.

5. Banc d'essai selon la revendication 2 ou selon la revendication 2 et l'une des revendications 3 ou 4, **caractérisé en ce que** les premier (15), deuxième (16) et/ou troisième (17) capteurs de température comportent chacun un capteur de température en platine, en particulier un capteur de température Pt100.

6. Banc d'essai selon la revendication 3 ou selon la revendication 3 et l'une des revendications 4 ou 5, **caractérisé en ce que** les quatrième (18) et/ou cinquième (19) capteurs de température (19) comportent chacun un capteur de température à coefficient de température positif à courbe de résistance non linéaire, en particulier un capteur de température triple PTC.

7. Banc d'essai selon la revendication 3 ou la revendication 3 et l'une des revendications 4 à 6, **caractérisé en ce qu'**il est prévu, en plus des quatrième (18) et cinquième (19) capteurs de température, au moins un autre capteur de température dans l'enroulement de stator.

8. Banc d'essai selon la revendication 7, **caractérisé en ce que** ledit autre capteur de température comporte un capteur de température à coefficient de température positif à courbe de résistance non linéaire, en particulier un capteur de température triple PTC.

9. Banc d'essai selon l'une des revendications 1 à 8, **caractérisé en ce que** la prescription de commande pour déclencher le dispositif de commande de vitesse de rotation (14) du moteur de ventilateur (10) prévoit une zone avec une relation linéaire entre la vitesse de rotation du moteur de ventilateur (10) et la température mesurée par le premier capteur de température (15).

10. Banc d'essai selon la revendication 9, **caractérisé en ce que** la relation linéaire entre une limite inférieure de température prédéfinie (t₁) et une limite supérieure de température prédéfinie (t₂) est prédéterminée.

11. Banc d'essai selon la revendication 6 ou 8, **caractérisé en ce que** les capteurs de température à coefficient de température positif, en particulier les capteurs PTC, sont disposés régulièrement sur la circonférence de l'enroulement de stator.

12. Banc d'essai selon l'une des revendications 1 à 11, **caractérisé en ce que** le dispositif de commande de vitesse de rotation (14) comporte un convertisseur de fréquence pour régler un courant d'alimentation pour le moteur de ventilateur (10).

13. Procédé pour commander la vitesse de rotation d'un moteur de ventilateur (10) dans un dispositif à ventilateur (9) destiné à refroidir un dispositif de contrainte (2) d'un banc d'essai selon l'une des revendications précédentes, étant précisé que l'unité de commande (20) du dispositif de commande de moteur de ventilateur prend la disposition de commande suivante :
+ déclenchement continu du dispositif de commande de vitesse de rotation (14) du dispositif à ventilateur (9) en fonction d'un signal de mesure du premier capteur de température (15) et sur la base d'une prescription de commande sous la forme d'une affectation de la vitesse de rotation du moteur de ventilateur (10) et de la température mesurée par le premier capteur de température (15).

14. Procédé selon la revendication 13, étant précisé que l'unité de commande prend les dispositions de commande suivantes :
+ déclenchement du dispositif de commande de vitesse de rotation (14) du dispositif à ventilateur (9) pour régler une vitesse de rotation maximale du moteur de ventilateur (10) si les deuxième (16) et/ou troisième (17) capteurs de température détectent un dépassement d'une valeur limite d'avertissement de support qui est prédéterminée pour le dispositif de support (7, 8) respectif,
+ arrêt du dispositif de contrainte (2) si les deuxième (16) et/ou troisième (17) capteurs de température détectent un dépassement d'une valeur limite d'alarme de support qui est prédéterminée pour le dispositif de support (7, 8) respectif, étant précisé que la valeur limite d'alarme de support est supérieure à la valeur limite d'avertissement de support.

15. Procédé selon la revendication 13 ou 14, étant précisé que l'unité de commande prend les dispositions de commande suivantes :
+ déclenchement du dispositif de commande de vitesse de rotation (14) du dispositif à ventilateur (9) pour régler une vitesse de rotation maximale du moteur de ventilateur (10) si le quatrième capteur de température (18) détecte un dépassement d'une valeur limite d'avertissement de stator qui est prédéterminée pour la température de l'enroulement de stator,
+ arrêt du dispositif de contrainte (2) si le cinquième capteur de température (19) détecte un dépassement d'une valeur limite d'alarme de stator qui est prédéterminée pour la température de l'enroulement de stator, étant précisé que la valeur limite d'alarme de stator est supérieure à la valeur limite d'avertissement de stator.
